# EUROPEAN PATENT SPECIFICATION

(11) **EP 4 279 707 B1**
(45) Date of publication and mention of the grant of the patent: **25.11.2026**
(21) Application number: 23201965.3
(22) Date of filing: 14.04.2021
(51) Int. Cl.: F01D 11/00, F01D 25/00, F01D 5/30, F01D 5/22

(54) **METHOD FOR FORMING A FAN BLADE PLATFORM FOR A GAS TURBINE ENGINE**
VERFAHREN ZUR HERSTELLUNG EINER GEBLÄSESCHAUFELPLATTFORM FÜR EINEN GASTURBINENMOTOR
PROCÉDÉ DE FABRICATION D'UNE PLATEFORME DE PALE DE SOUFFLANTE POUR MOTEUR À TURBINE À GAZ

(30) Priority: 16.04.2020 US 202016850848
(43) Date of publication of application: 22.11.2023
(62) Document number(s) of the earlier application(s) in accordance with Art. 76 EPC: 21168357.8 / 3 896 261
(73) Proprietor: RTX Corporation, Farmington, CT 06032 (US)
(72) Inventor: THEERTHAM, Arun K., Rocky Hill, 06067 (US)
(74) Representative: Dehns

(56) References cited:
- EP-A1- 3 121 386
- US-A1- 2012 148 388
- US-A1- 2014 086 751
- US-A1- 2014 271 143
- US-A1- 2019 112 934

## Description

### TECHNICAL FIELD

The present invention relates to a method of forming a fan blade platform.

### BACKGROUND

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

The fan section includes fan blades with spacers or platforms between adjacent blades at a radially inner edge of the flowpath. The platforms can be integral with the fan blades or separately attached to the fan blade.

EP 3 121 386 A1 discloses a fan blade platform, which may include a flowpath, a first sidewall extending from the flowpath to a circular member, and a second sidewall extending from the flowpath to the circular member. A stiffening member may also extend from the circular member to the flowpath and be formed integrally with the first sidewall, the second sidewall, and the flowpath.

US 2014/271143 A1 discloses a fan spacer for placement between a pair of adjacent blades in a fan assembly and a related method of making. The fan spacer has a spacer body including an airflow surface shaped to direct air between the pair of adjacent blades in which the airflow surface is shaped on opposing sides to correspond to the pair of adjacent blades. An over molded feature is molded onto the airflow surface of the spacer body in which the over molded feature both includes an erosion coating on the airflow surface and, on the two opposing sides, seals configured to seal against the pair of adjacent blades on the opposing sides of the airflow surface.

US 2014/086751 A1 discloses a fluid-washed assembly for an axial flow machine, such as a fan blade assembly for a gas turbine engine. The assembly has an array of members circumferentially spaced about the machine axis, each member extending from a radially inner end to a radially outer end with respect to the axis of rotation of the machine. Each member has opposing outer surfaces extending between a leading edge and a trailing edge thereof with respect to the direction of oncoming fluid flow in use. A plurality of annulus fillers are provided between each member, wherein each annulus filler is affixed against an outer surface of an associated member at a location between the inner and outer ends in a manner which supports the annulus filler in use. The annulus fillers may comprise a composite material which is bonded to the associated member using an adhesive. US 2014/086751 A1 relates a method of forming a fan blade platform for a gas turbine engine, the fan blade platform comprising a pressure side platform half and a suction side platform half.

### SUMMARY

According to an aspect, a method of forming a fan blade platform is provided as recited in claim 1.

Further, optional features are recited in each of claims 2 and 3.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 is a schematic view of an example gas turbine engine;
Figure 2 is a perspective schematic view of a fan hub with a pair of fan blades having a fan blade platform there between;
Figure 3 is a frontal perspective schematic view of the fan blade platform of Figure 2;
Figure 4 is an aft perspective schematic view of the fan blade platform of Figure 2;
Figure 5 is a radially inner schematic view of one of the fan blades with a pressure side platform half and a suction side platform half;
Figure 6 illustrates a method of forming one of the pressure side or suction side platform halves;
Figure 7 is a frontal perspective schematic view of another fan blade platform having a pressure side platform half and a suction side platform half surrounding an airfoil;
Figure 8 is a radially outward perspective schematic view of the pressure side platform half and the suction side platform half of Figure 7 adjacent each other;
Figure 9 is another radially outward perspective schematic view of the pressure side platform half and the suction side platform half of Figure 7 adjacent each other;
Figure 10A is a perspective schematic view of yet another fan blade platform;
Figure 10B is a top of an example two-piece ring;
Figure 11 is another perspective schematic view of the fan blade platform of Figure 10;
Figure 12 is a cross-sectional schematic view taken along line 12-12 of Figure 11;
Figure 13 illustrates a method of forming one of the pressure side or suction side platform halves of the fan blade platform of Figure 10;
Figure 14 is a top schematic view of yet another fan blade platform; and
Figure 15 is a side schematic view of the fan blade platform of Figure 13.

### DETAILED DESCRIPTION

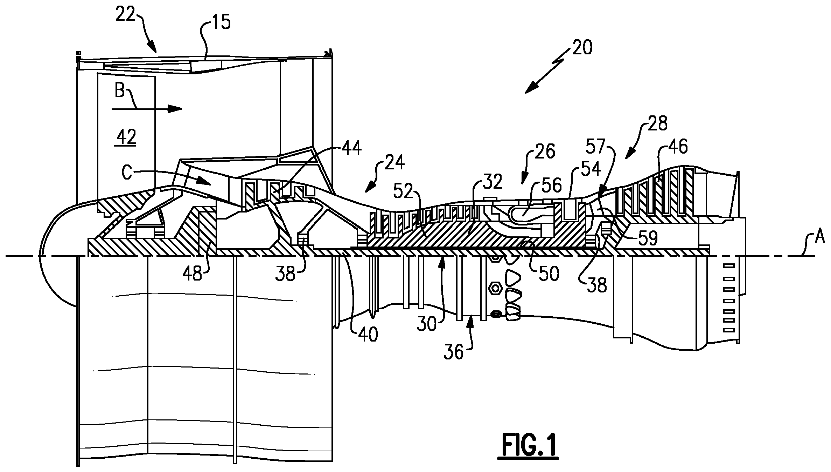

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow half B in a bypass duct defined within a housing 15, such as a fan case or nacelle, and also drives air along a core flow half C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes fan blades 59 which are in the core airflow half C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

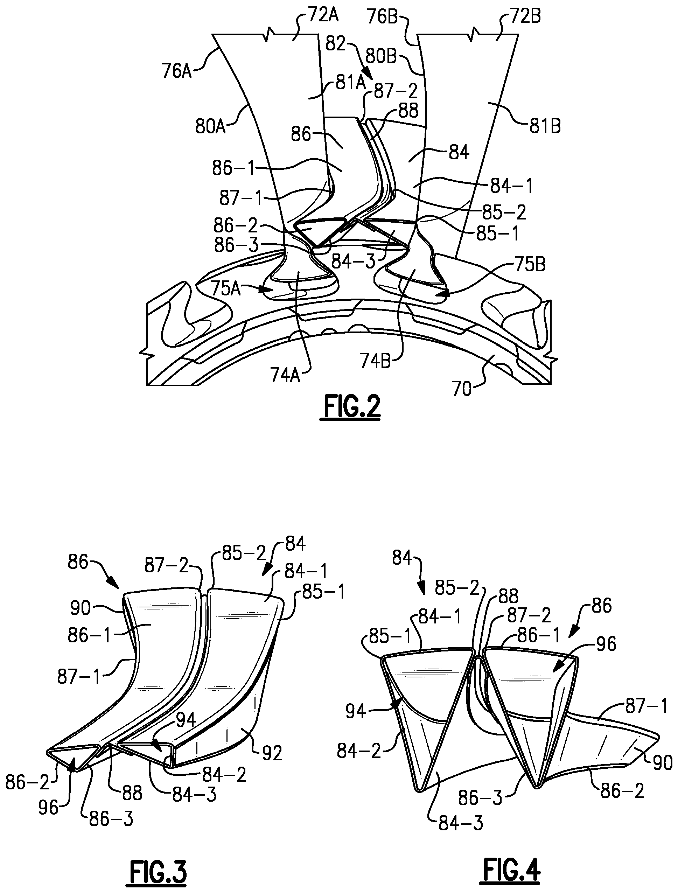

Figure 2 illustrates an enlarged view of a fan hub 70, a first fan blade 72A, a second fan blade 72B, and a fan blade platform 82 located between the first and second fan blades 72A, 72B. Although only a single platform 82 and pair of fan blades 72A, 72B are shown in the illustrated example, a plurality of fan blades 72 would surround the fan hub 70 with one of the platforms 82 between each adjacent pairs of fan blades 72.

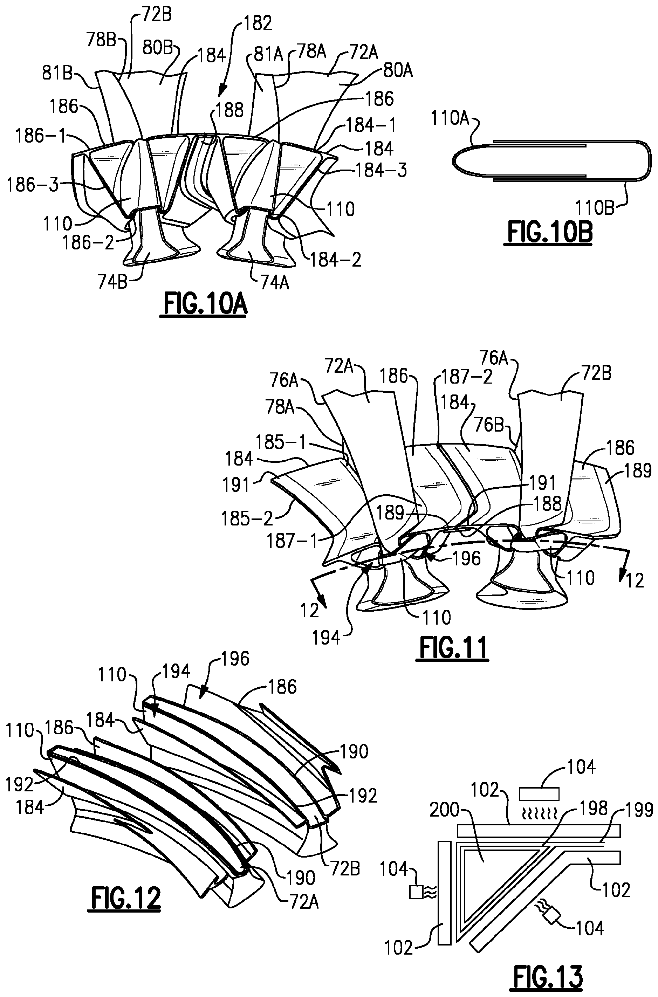

The first fan blade 72A is secured to the fan hub 70 with a first root portion 74A located in a first fan hub recess 75A in the fan hub 70 and the second fan blade 72B is secured to the fan hub 70 with a second root portion 74B located in a second fan hub recess 75B in the fan hub 70. The first and second fan blades 72A, 72B each include a pressure side 80A, 80B and a suction side 81A, 81B that extend between a leading edge 76A, 76B and a trialing edge 78A, 78B (Figure 10), respectively.

The fan blade platform 82 extends between the first and second fan blades 72A, 72B and is located immediately radially outward of the first and second root portions 74A, 74B, respectively. The fan blade platform 82 includes a pressure side platform half 84 and a suction side platform half 86. A seal 88 engages the pressure side platform half 84 and the suction side platform half 86 to prevent air from passing between the two platform halves 84, 86. The pressure side platform half 84 is fixed relative to the pressure side 80B on the second fan blade 72B and the suction side platform half 86 is fixed relative to the suction side 81A of the first fan blade 72A. In this disclosure, radial or radially and axial or axially is in relation to the engine axis A unless stated otherwise.

As shown in Figures 2-5, the suction side platform half 86 includes a gas path wall 86-1, an attachment wall 86-2, and a connecting wall 86-3 defining a triangular cross-section. In the illustrated example, the suction side platform half 86 is formed from a composite material including at least one or a plurality of plies. The suction side platform half 86 includes a first edge 87-1 located at an intersection of the gas path wall 86-1 and the attachment wall 86-2. The first edge 87-1 follows a concave profile along a convex profile of the suction side 81A of the first fan blade 72A. A second edge 87-2 is located opposite the first edge 87-1 at an intersection of the first gas path wall 86-1 and the connecting wall 86-3. The second edge 87-2 follows a convex profile similar to the convex profile of the suction side 81A of the first fan blade 72A.

The pressure side platform half 84 includes a gas path wall 84-1, an attachment wall 84-2, and a connecting wall 84-3 defining a triangular cross-section. In the illustrated example, the pressure side platform half 84 is formed from a composite material including at least one or a plurality of plies. The pressure side platform half includes a first edge 85-1 located at an intersection of the gas path wall 84-1 and the attachment wall 84-2. The first edge 85-1 follows a convex profile along a concave profile of the pressure side 80B of the second fan blade 72B. A second edge 85-2 is located opposite the first edge 85-1 at an intersection of the gas path wall 84-1 and the connecting wall 84-3. The second edge 85-2 follows a concave profile similar to the concave profile of the pressure side 80B while maintaining a constant gap or spacing with the convex profile of the second edge 87-2.

In the illustrated example, the seal 88 is located adjacent the second edges 85-2, 87-2 and is made of an elastomeric material, such as rubber. Additionally, the seal 88 is fixed relative to one of the connecting walls 84-3, 86-3 with an adhesive and moveable relative to the other of the connecting wall 84-3, 86-3. By fixing the seal 88 to only one of the suction side platform half 86 and pressure side platform half 84, the seal 88 accommodates for movement caused by thermal growth and engine loading to prevent gas path air from leaking between the two platform halves 84, 86 into an internal cavity. Also in the illustrated example, the seal 88 includes a V-shaped cross section that follows a curvilineal profile in an axial direction following the second edges 85-2, 87-2. Therefore, the seal 88 does not extend linearly or straight.

The suction side platform half 86 is fixed relative to the suction side 81A of the first fan blade 72A with an adhesive film 90 (Figure 4). The adhesive film 90 covers a majority of an outer surface of the attachment wall 86-2 or to a perimeter of the attachment wall 86-2. Similarly, the pressure side platform half 84 is attached to the pressure side 80B of the second fan blade 72B with an adhesive film 92 (Figure 3). The adhesive film 92 also covers a majority of the attachment wall 84-2 or to a perimeter of the attachment wall 84-2.

As shown in Figures 3 and 4, the pressure side platform half 84 includes an internal passageway 94 that is at least partially defined by the gas path wall 84-1, the attachment wall 84-2, and the connecting wall 84-3. In the illustrated example, the internal passageway 94 defines a triangular profile with a radial height that increases when moving in an axially downstream direction. Furthermore, a cross-sectional area of an inlet (Figure 3) to the internal passageway 94 is smaller than a cross-sectional area of an outlet (Figure 4) to the internal passageway 94.

Similarly, the suction side platform half 86 includes an internal passageway 96. The internal passageway 96 is at least partially defined by the gas path wall 86-1, the attachment wall 86-2, and the connecting wall 86-3. In the illustrated example, the internal passageway 96 defines a triangular profile with a radial that increases when moving in an axially downstream direction. Furthermore, a cross-sectional area of an inlet (Figure 3) to the internal passageway 96 is smaller than a cross-sectional area of an outlet (Figure 4) of the internal passageway 96.

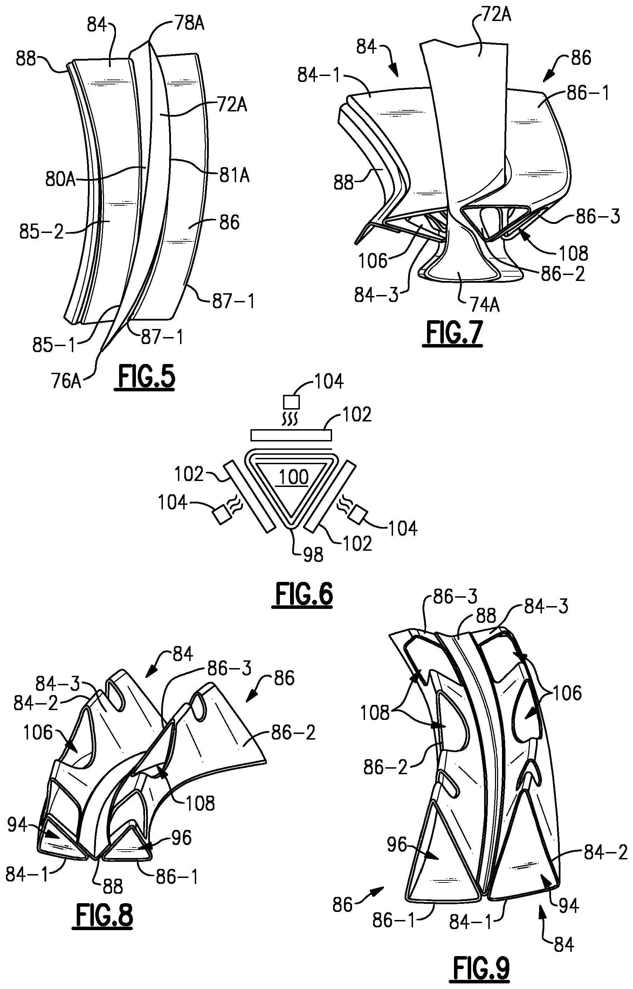

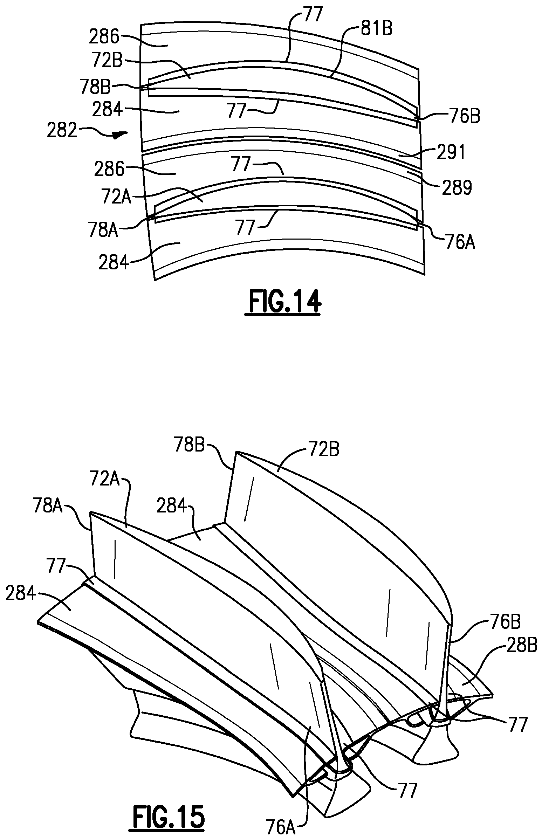

In the illustrated example shown in Figure 5, the leading edge 76A of the fan blade 72A extends axially forward of an upstream edge of the suction side platform half 86 and an upstream edge of the pressure side platform half 84. However, the leading 76A need not extend axially forward of the platforms 84, 86 as shown in Figure 14. In this disclosure, upstream or downstream and forward and aft are in relation to a direction of air flow through the gas turbine engine unless stated otherwise. In the illustrated example, the seal 88 is fixed relative to the pressure side platform half 84 and is therefore moveable relative to a corresponding suction side platform half 86.

As shown in Figure 6, either of the pressure side platform half 84 or the suction side platform half 86 can be formed by wrapping at least one ply 98 around a mandrel 100. The at least one ply 98 can include a carbon fiber pre-preg material or another composite material. In the illustrated example, the at least one ply 98 is formed to the mandrel 100 through the application of at least one of pressure or heat. The pressure is applied through force from a press 102 and the heat is applied from a heat source 104 to cure the at least one ply 98 to the shape of the mandrel 100. After the at least one ply 98 has been formed to the mandrel 100, the mandrel 100 can be removed to leave one of the pressure or suction side platform halves 84, 86.

As shown in Figures 7-9, a portion of at least one of the pressure or suction side platform halves 84, 86 can have material removed from at least one of the attachment walls 84-2, 86-2 or the connecting walls 84-3, 86-3, respectively. The material can be removed through at least one of a machining or cutting process. One feature of the removed material is a reduction in weight of the platform 82 as a whole. The removal of material leaves a plurality of openings 106, 108 in the pressure and suction side pressure halves 84, 86, respectively. The openings 106, 108 are positioned in areas of the pressure and suction side platform halves 84, 86, that experience reduced loads. Additionally, the openings 106, 108 can extend through an intersection of the attachment walls 84-2, 86-2 and the connecting walls 84-3, 86-3.

Figures 10 through 13 illustrate another example fan blade platform 182 similar to the fan blade platform 82 above except where described below or shown in the Figures. Similar or identical elements between the fan blade platform 82 and the fan blade platform 182 will include the addition of the leading one ("1").

The fan blade platform 182 extends between the first fan blade 72A and the second fan blade 72B. The fan blade platform 182 includes a pressure side platform half 184 and a suction side platform half 186. A seal 188 engages the pressure side platform half 184 and the suction side platform half 186. The pressure side platform half 184 is fixed relative to the pressure side 80B on the second fan blade 72B and the suction side platform half 186 is fixed relative to the suction side 81A of the first fan blade 72A.

The suction side platform half 186 includes a gas path wall 186-1, an attachment wall 186-2 and a connecting wall 186-3. In the illustrated example, the suction side platform half 186 is formed from a composite material including a plurality of plies or layers. The suction side platform half 186 includes a first edge 187-1 located at an intersection of the gas path wall 186-1 and the attachment wall 186-2. The first edge 187-1 follows a concave profile along the convex profile of the suction side 81A of the first fan blade 72A. A second edge 187-2 is located opposite the first edge 187-1 on a ledge 189 extending from an intersection of the first gas path wall 186-1 and the connecting wall 186-3. The second edge 187-2 follows a convex profile similar to the convex profile of the suction side 81A of the first fan blade 72A.

The pressure side platform half 184 includes a gas path wall 184-1, an attachment wall 184-2, and a connecting wall 184-3. In the illustrated example, the pressure side platform half 184 is formed from a composite material including a plurality of plies or layers. The pressure side platform half 184 includes a first edge 185-1 located at an intersection of the gas path wall 184-1 and the attachment wall 184-2. The first edge 185-1 follows a convex profile along the concave profile of the pressure side 80B of the second fan blade 72B. A second edge 185-2 is located opposite the first edge 185-1 on a ledge 191 extending from an intersection of the gas path wall 184-1 and the connecting wall 184-3. The second edge 185-2 follows a concave profile similar to the concave profile of the pressure side 80B while maintaining a constant gap or spacing with the convex profile of the second edge 187-2.

In the illustrated example, the seal 188 is located adjacent the second edges 185-2, 187-2 and is spaced from the connecting walls 184-3, 186-3, respectively, such the seal 188 is flat extending between the pressure side platform half 184 and the suction side platform half 186. By fixing the seal 188 to only one of the suction side platform half 86 and pressure side platform half 84, the seal 188 accommodates for movement cased by thermal growth and engine loading to prevent gas path air from leaking between the two platform halves 184, 186 and into the internal cavity. Also in the illustrated example, the seal 188 extends in a plane with a curvilineal profile to follow a profile of the second edges 185-2, 186-2. Therefore, the seal 188 does not extend linearly or straight but instead follows the curvilineal profile of the second edges 185-2, 187-2, as shown in the Figures.

The suction side platform half 186 is fixed relative to the suction side 81A of the first fan blade 72A with an adhesive film 190 and the pressure side platform half 84 is attached to the pressure side 80B of the second fan blade 72B with an adhesive film 192.

As shown in Figures 10 and 11, the pressure side platform half 184 includes an internal passageway 194 that is at least partially defined by the gas path wall 184-1, the attachment wall 184-2, and the connecting wall 184-3. In the illustrated example, the internal passageway 194 defines a triangular profile with a radial height that increases when moving in an axially downstream direction. Furthermore, a cross-sectional area of an inlet (Figure 11) to the internal passageway 94 is smaller than a cross-sectional area of an outlet (Figure 10) to the internal passageway 94.

Similarly, the suction side platform half 186 includes an internal passageway 196. The internal passageway 196 is at least partially defined by the gas path wall 186-1, the attachment wall 186-2, and the connecting wall 186-3. In the illustrated example, the internal passageway 196 defines a triangular profile with a radial that increases when moving in an axially downstream direction. Furthermore, a cross-sectional area of an inlet (Figure 11) to the internal passageway 196 is smaller than a cross-sectional area of an outlet (Figure 10) of the internal passageway 196.

As shown in Figures 10-12, a ring 110 extends through a corresponding one of the internal passageways 194, 196 and around a corresponding one of the fan blades 72A, 72B. The ring 110 could be continuous ring that is formed by wrapping a material through the internal passageways 194, 196 (Figure 10A). Alternatively, a two-piece ring with a first C-shaped portion 110A and a second C-shaped portion 110B could extend through the passageways 194, 196 and around a corresponding one of fan blades 72A, 72B in an overlapping configuration as shown in Figure 10B. The ring 110 provides a secondary attachment function to secure the pressure and suction side platform halves 184, 186 to the corresponding fan blade 72. The ring 110 could also be used with the pressure and suction side platform halves 84, 86 described above.

As shown in Figure 13, either of the pressure side platform half 184 or the suction side platform half 186 are formed by wrapping at least one first ply 198 around the mandrel 200 and at least one second ply 199 around the at least one first ply 198 to form one of the ledges 189, 191. The at least one first and second plies 198, 199 can include a carbon fiber pre-preg material or another composite material. Pressure can then be applied with the press 102 with or without the application of heat from the heat source 104 to form the at least one first and second ply 198, 199 to the shape of the mandrel 200. After the at least one first and second plies 198, 199 have been formed, the mandrel 200 can be removed to leave one of the platform half 184, 186.

Figures 14 and 15 illustrate another example fan blade platform 282 similar to the fan blade platform 182 above except where described below or shown in the Figures. Similar or identical elements between the fan blade platform 182 and the fan blade platform 282 will include the addition of the leading two ("2") in place of the leading one ("1").

The fan blade platform extends between the first fan blade 72A and the second fan blade 72B. The fan blade platform 282 includes a pressure side platform half 284 and a suction side platform half 286. A seal 288 engages the pressure side platform half 284 and the suction side platform half 286. The pressure side platform half 284 is fixed relative to the pressure side 80B on the second fan blade 72B and the suction side platform half 186 is fixed relative to the suction side 81A of the first fan blade 72A. A leading edge of the pressure and suction side platform halves 284, 286 extends axially forward of the leading edges 76A, 76B and a trailing edge of the pressure and suction side platform halves 284, 286 extends axially aft of the trailing edges 78A, 78B.

Additionally, the as shown in Figures 14 and 15, the first and second fan blades 72A, 72B each include a protrusions 77 on both the pressure sides 80A, 80B and the suction sides 81A, 81B. The protrusions 77 are located immediately radially outward of the platform halves 284, 286 to provide additional retention in the radial direction. The protrusions 77 are also integrally formed with a corresponding one of the fans blades 72A, 72B such that the protrusions 77 and fan blades form a single piece unitary component. In the illustrated example, the protrusions 77 extend from the leading edge 76A, 76B to the trailing edge 78A, 78B.

The foregoing description shall be interpreted as illustrative and not in any limiting sense. A worker of ordinary skill in the art would understand that certain modifications could come within the scope of this disclosure. For these reasons, the following claim should be studied to determine the true scope and content of this disclosure.

## Claims

1. A method of forming a fan blade platform (82; 182; 282) for a gas turbine engine (20), the fan blade platform comprising a pressure side platform half (84; 184; 284) and a suction side platform half (86; 186; 286), the method comprising forming the pressure side platform half (84; 184; 284) by:
wrapping a composite material around a mandrel (100; 200) to form a fan blade platform half having a gas path wall (84-1; 184-1), an attachment wall (84-2; 184-2), and a connecting wall (84-3; 184-3) attached to the gas path wall (84-1; 184-1) and the attachment wall (84-2; 184-2), wherein the gas path wall (84-1; 184-1) includes a first edge (85-1) at an intersection with the attachment wall (84-2; 184-2) and a second edge (85-2) opposite the first edge (85-1) with the first edge (85-1) following a convex profile and the second edge (85-2) following a concave profile;
forming the composite material to the mandrel (100; 200); and
removing the mandrel (100; 200) to form a central passageway extending through a length of the fan blade platform half;
the method further comprising forming the suction side platform half (86; 186; 286) by:
wrapping a composite material around a mandrel (100; 200) to form a fan blade platform half having a gas path wall (86-1; 186-1), an attachment wall (86-2; 186-2), and a connecting wall attached to the gas path wall (86-1; 186-1) and the attachment wall (86-2; 186-2), wherein the gas path wall (86-1; 186-1) includes a first edge (87-1) at an intersection with the attachment wall (86-2; 186-2) and a second edge (87-2) opposite the first edge (87-1) and the first edge (87-1) follows a concave profile and the second edge (87-2_ follows a convex profile;
forming the composite material to the mandrel (100; 200); and removing the mandrel (100; 200) to form a central passageway extending through a length of the fan blade platform half,
**characterized in that**, the fan blade platform (82; 182; 282) comprises a seal (88; 188; 288) engaging the pressure side platform half (84; 184; 284) and the suction side platform half (86; 186; 286) and wherein the method further comprises:
fixing the seal (88; 188; 288) relative to one of the connecting wall (84-3; 184-3) of the pressure side platform half (84; 184; 284) and the connecting wall ((86-3; 186-3) of the suction side platform half (86; 186; 286),
wherein the seal (88; 188; 288) is in moveable engagement with to the other of the connecting wall (84-3; 184-3) of the pressure side platform half (84; 184; 284) and the connecting wall (86-3; 186-3) of the suction side platform half (86; 186; 286); and
wherein the seal is V-shaped and follows a curvilinear path in an axial direction.

2. The method of claim 1, further comprising forming at least one passageway (94; 194; 96; 196) extending through the attachment wall and the connecting wall of at least one of the pressure or suction side platform halves.

3. The method of claim 1 or 2, wherein the fan blade platform (82; 182; 282) is configured to be located between a first fan blade (72A) and a second fan blade (72B) of a gas turbine engine (20).

## Patentansprüche

1. Verfahren zur Bildung einer Fanschaufelplattform (82; 182; 282) für ein Gasturbinentriebwerk (20), wobei die Fanschaufelplattform eine Druckseiten-Plattformhälfte (84; 184; 284) und eine Saugseiten-Plattformhälfte (86; 186; 286) umfasst, wobei das Verfahren die Bildung der Druckseiten-Plattformhälfte (84; 184; 284) umfasst durch: Wickeln eines Verbundwerkstoffs um einen Dorn (100; 200), um eine Fanschaufelplattformhälfte mit einer Gasströmungsweg-Wand (84-1; 184-1), einer Befestigungswand (84-2; 184-2) und einer Verbindungswand (84-3; 184-3), die an der Gasströmungsweg-Wand (84-1; 184-1) und der Befestigungswand (84-2; 184-2) angebracht ist, zu bilden, wobei die Gasströmungsweg-Wand (84-1; 184-1) eine erste Kante (85-1) an einer Schnittstelle mit der Befestigungswand (84-2; 184-2) und eine der ersten Kante (85-1) gegenüberliegende zweite Kante (85-2) umfasst, wobei die erste Kante (85-1) einem konvexen Profil folgt und die zweite Kante (85-2) einem konkaven Profil folgt; Formen des Verbundwerkstoffs an den Dorn (100; 200); und Entfernen des Dorns (100; 200), um einen zentralen Durchgang zu bilden, der sich durch eine Länge der Fanschaufelplattformhälfte erstreckt; wobei das Verfahren ferner die Bildung der Saugseiten-Plattformhälfte (86; 186; 286) umfasst durch: Wickeln eines Verbundwerkstoffs um einen Dorn (100; 200), um eine Fanschaufelplattformhälfte mit einer Gasströmungsweg-Wand (86-1; 186-1), einer Befestigungswand (86-2; 186-2) und einer Verbindungswand, die an der GasströmungswegWand (86-1; 186-1) und der Befestigungswand (86-2; 186-2) angebracht ist, zu bilden, wobei die Gasströmungsweg-Wand (86-1; 186-1) eine erste Kante (87-1) an einer Schnittstelle mit der Befestigungswand (86-2; 186-2) und eine der ersten Kante (87-1) gegenüberliegende zweite Kante (87-2) umfasst, und die erste Kante (87-1) einem konkaven Profil folgt und die zweite Kante (87-2) einem konvexen Profil folgt; Formen des Verbundwerkstoffs an den Dorn (100; 200); und Entfernen des Dorns (100; 200), um einen zentralen Durchgang zu bilden, der sich durch eine Länge der Fanschaufelplattformhälfte erstreckt, **dadurch gekennzeichnet, dass** die Fanschaufelplattform (82; 182; 282) eine Dichtung (88; 188; 288) umfasst, die mit der Druckseiten-Plattformhälfte (84; 184; 284) und der Saugseiten-Plattformhälfte (86; 186; 286) in Eingriff steht, und wobei das Verfahren ferner umfasst: Festlegen der Dichtung (88; 188; 288) relativ zu einer der Verbindungswand (84-3; 184-3) der Druckseiten-Plattformhälfte (84; 184; 284) und der Verbindungswand (86-3; 186-3) der Saugseiten-Plattformhälfte (86; 186; 286), wobei die Dichtung (88; 188; 288) in beweglichem Eingriff mit der jeweils anderen der Verbindungswand (84-3; 184-3) der Druckseiten-Plattformhälfte (84; 184; 284) und der Verbindungswand (86-3; 186-3) der Saugseiten-Plattformhälfte (86; 186; 286) steht; und wobei die Dichtung V-förmig ist und einem kurvenförmigen Verlauf in einer axialen Richtung folgt.

2. Verfahren nach Anspruch 1, ferner umfassend das Bilden mindestens eines Durchgangs (94; 194; 96; 196), der sich durch die Befestigungswand und die Verbindungswand von mindestens einer der Druckseiten- oder Saugseiten-Plattformhälften erstreckt.

3. Verfahren nach Anspruch 1 oder 2, wobei die Fanschaufelplattform (82; 182; 282) dafür ausgelegt ist, zwischen einer ersten Fanschaufel (72A) und einer zweiten Fanschaufel (72B) eines Gasturbinentriebwerks (20) angeordnet zu werden.

## Revendications

1. Procédé de formation d'une plate-forme d'aube de soufflante (82 ; 182 ; 282) pour un moteur à turbine à gaz (20), la plate-forme d'aube de soufflante comprenant une moitié de plate-forme côté pression (84 ; 184 ; 284) et une moitié de plate-forme côté dépression (86 ; 186 ; 286), le procédé comprenant la formation de la moitié de plate-forme côté pression (84 ; 184 ; 284) par : l'enroulement d'un matériau composite autour d'un mandrin (100 ; 200) pour former une moitié de plate-forme d'aube de soufflante ayant une paroi de veine d'écoulement de gaz (84-1 ; 184-1), une paroi de fixation (84-2 ; 184-2) et une paroi de liaison (84-3 ; 184-3) attachée à la paroi de veine d'écoulement de gaz (84-1 ; 184-1) et à la paroi de fixation (84-2 ; 184-2), dans lequel la paroi de veine d'écoulement de gaz (84-1 ; 184-1) comprend un premier bord (85-1) à une intersection avec la paroi de fixation (84-2 ; 184-2) et un second bord (85-2) opposé au premier bord (85-1), le premier bord (85-1) suivant un profil convexe et le second bord (85-2) suivant un profil concave ; la mise en forme du matériau composite sur le mandrin (100 ; 200) ; et le retrait du mandrin (100 ; 200) pour former un passage central s'étendant sur toute la longueur de la moitié de plate-forme d'aube de soufflante ; le procédé comprenant en outre la formation de la moitié de plate-forme côté dépression (86 ; 186 ; 286) par : l'enroulement d'un matériau composite autour d'un mandrin (100 ; 200) pour former une moitié de plate-forme d'aube de soufflante ayant une paroi de veine d'écoulement de gaz (86-1 ; 186-1), une paroi de fixation (86-2 ; 186-2) et une paroi de liaison attachée à la paroi de veine d'écoulement de gaz (86-1 ; 186-1) et à la paroi de fixation (86-2 ; 186-2), dans lequel la paroi de veine d'écoulement de gaz (86-1 ; 186-1) comprend un premier bord (87-1) à une intersection avec la paroi de fixation (86-2 ; 186-2) et un second bord (87-2) opposé au premier bord (87-1), le premier bord (87-1) suivant un profil concave et le second bord (87-2) suivant un profil convexe ; la mise en forme du matériau composite sur le mandrin (100 ; 200) ; et le retrait du mandrin (100 ; 200) pour former un passage central s'étendant sur toute la longueur de la moitié de plate-forme d'aube de soufflante, **caractérisé en ce que** la plate-forme d'aube de soufflante (82 ; 182 ; 282) comprend un joint d'étanchéité (88 ; 188 ; 288) venant en prise avec la moitié de plate-forme côté pression (84 ; 184 ; 284) et la moitié de plate-forme côté dépression (86 ; 186 ; 286), et **en ce que** le procédé comprend en outre : la fixation du joint d'étanchéité (88 ; 188 ; 288) par rapport à l'une de la paroi de liaison (84-3 ; 184-3) de la moitié de plate-forme côté pression (84 ; 184 ; 284) et de la paroi de liaison (86-3 ; 186-3) de la moitié de plate-forme côté dépression (86 ; 186 ; 286), dans lequel le joint d'étanchéité (88 ; 188 ; 288) est en prise mobile avec l'autre de la paroi de liaison (84-3 ; 184-3) de la moitié de plate-forme côté pression (84 ; 184 ; 284) et de la paroi de liaison (86-3 ; 186-3) de la moitié de plate-forme côté dépression (86 ; 186 ; 286) ; et dans lequel le joint d'étanchéité est en forme de V et suit un trajet curviligne dans une direction axiale.

2. Procédé selon la revendication 1, comprenant en outre la formation d'au moins un passage (94 ; 194 ; 96 ; 196) s'étendant à travers la paroi de fixation et la paroi de liaison d'au moins l'une des moitiés de plate-forme côté pression ou côté dépression.

3. Procédé selon la revendication 1 ou 2, dans lequel la plate-forme d'aube de soufflante (82 ; 182 ; 282) est configurée pour être située entre une première aube de soufflante (72A) et une seconde aube de soufflante (72B) d'un moteur à turbine à gaz (20).
